# EUROPEAN PATENT SPECIFICATION

(11) **EP 3 358 804 B1**
(45) Date of publication and mention of the grant of the patent: **10.03.2021**
(21) Application number: 18154300.0
(22) Date of filing: 30.01.2018
(51) Int. Cl.: H04L 29/06, H04L 29/08, H04B 7/185

(54) **EFFICIENT MESSAGE COMBINING COMMUNICATION EXCHANGE SYSTEM**
KOMMUNIKATIONSSYSTEM MIT EFFIZIENTER NACHRICHTENKOMBINATION
SYSTÈME D'ÉCHANGE DE COMMUNICATION À COMBINAISON DE MESSAGE EFFICACE

(30) Priority: 06.02.2017 US 201715425883
(43) Date of publication of application: 08.08.2018
(73) Proprietor: Honeywell International Inc., Morris Plains, NJ 07950 (US)
(72) Inventor: SRINIVASAN, Divya Swarup Giriyappa, Morris Plains, NJ New Jersey 07950 (US); JUDD, Thomas D., Morris Plains, NJ New Jersey 07950 (US)
(74) Representative: Houghton, Mark Phillip

(56) References cited:
- WO-A1-2016/009254
- US-A1- 2010 062 761
- US-A1- 2011 281 594
- SKORDOULIS D ET AL: "IEEE 802.11n MAC frame aggregation mechanisms for next-generation high-throughput WLANs [medium access control protocols for wireless LANs]", TECHNICAL REPORT OF WIRELESS NETWORKING GROUP, COORDINATED SCIENCE LABORATORY; DEPT. ELECTRICAL AND COMPUTER ENGINEERING; UNIVERSITY OF ILLINOIS AT URBANA-CHAMPAIGN, US, vol. 14, no. 1, 1 February 2008 (2008-02-01), pages 40-47, XP011204551, ISSN: 1536-1284
- Anonymous: "IEEE Standard for Information technology - Telecommunications and information exchange between systems - Local and metropolitan area networks - Specific requirements, Part 11: Wireless LAN Medium Access Control (MAC) and Physical Layer (PHY) Specifications, Amendment 5: Enhancements for Higher Throu", , 29 October 2009 (2009-10-29), XP055380045, Retrieved from the Internet: URL:http://standards.ieee.org/getieee802/d ownload/802.11n-2009.pdf [retrieved on 2017-06-09]

## Description

### BACKGROUND

Communication networks implement communication hubs that communication messages between themselves. The messages are processed at each communication hub according by specific protocols set by the communication network as the message traverses the network from its origin to its destination. An example communication network is an aircraft to/from ground system communication system such as the Aircraft Communication Addressing and Reporting System (ACARS). ACARS is a message system used to communicate relatively short messages between the aircraft and ground stations via airband radio or satellite such as Very High Frequency (VHF), High Frequency (HF) and Satellite Communications (SATCOM). Due to increased messages being communicated between modern aircraft and ground stations bandwidth limitations occur. As a result, message exchange may be slower thereby causing messages to get queued in ACARS routers. The queuing of the messages increases the time to deliver and receive messages.

For the reasons stated above and for other reasons stated below which will become apparent to those skilled in the art upon reading and understanding the present specification, there is a need in the art for and efficient and effective system that increases messages exchange rates between communication hubs in a communication network.

WO2016009254A1 discloses dynamic packet aggregation and compression and, in particular, a data compression method that performs an initial analysis on each of a plurality of candidate combinations of blocks containing inbound packets of network traffic data. The method determines an initial analysis result for each of the candidate combinations and compares the initial analysis results of the candidate combinations. The method determines a desired analysis result based on the comparison and selects a subset of blocks for which the initial analysis result of the candidate combination satisfies the desired analysis result. The method forwards the selected subset of blocks for combining into outbound payload data.

Article "IEEE 802.11 n MAC frame aggregation mechanisms for next-generation high-throughput WLANs" (Skordoulis D Et Al: Technical Report Of Wireless Networking Group, Coordinated Science Laboratory; Dept. Electrical And Computer Engineering; University Of Illinois, US, vol. 14, no. 1, 2008-02-01, pages 40-47, XP011204551, ISSN: 1536-1284) provides a description for various frame aggregation mechanisms proposed for that standard.

US20011/281594A1 discloses the consolidation of international SMS messages if the combined message length is not longer than a traditional SMS message length, i.e., 160 characters. It also discloses payload-agnostic limitations on such a combination.

### SUMMARY OF INVENTION

The present invention provides for a method of compressing messages into a message block and a corresponding communication hub as claimed in the accompanying claims.

### BRIEF DESCRIPTION OF THE DRAWINGS

The present invention can be more easily understood and further advantages and uses thereof will be more readily apparent, when considered in view of the detailed description and the following figures in which:
Figure 1 illustrates a block diagram of a communication network of an embodiment;
Figure 2 illustrates a standard aircraft communication addressing and reporting system message block of the prior art;
Figure 3A illustrates example messages of an embodiment;
Figure 3B illustrates a compressed message of an embodiment;
Figure 4A illustrates a message processing flow diagram of an embodiment;
Figure 4B illustrates a transmission delay flow diagram of an embodiment;
Figure 5 illustrates a message compression flow diagram of an embodiment; and
Figure 6 illustrates a message decompression flow diagram of an embodiment.

In accordance with common practice, the various described features are not drawn to scale but are drawn to emphasize specific features relevant to the present invention. Reference characters denote like elements throughout Figures and text.

### DETAILED DESCRIPTION

In the following detailed description, reference is made to the accompanying drawings, which form a part hereof, and in which is shown by way of illustration specific embodiments in which the inventions may be practiced. These embodiments are described in sufficient detail to enable those skilled in the art to practice the invention, and it is to be understood that other embodiments may be utilized and that changes may be made without departing from the scope of the present invention. The following detailed description is, therefore, not to be taken in a limiting sense, and the scope of the present invention is defined only by the claims.

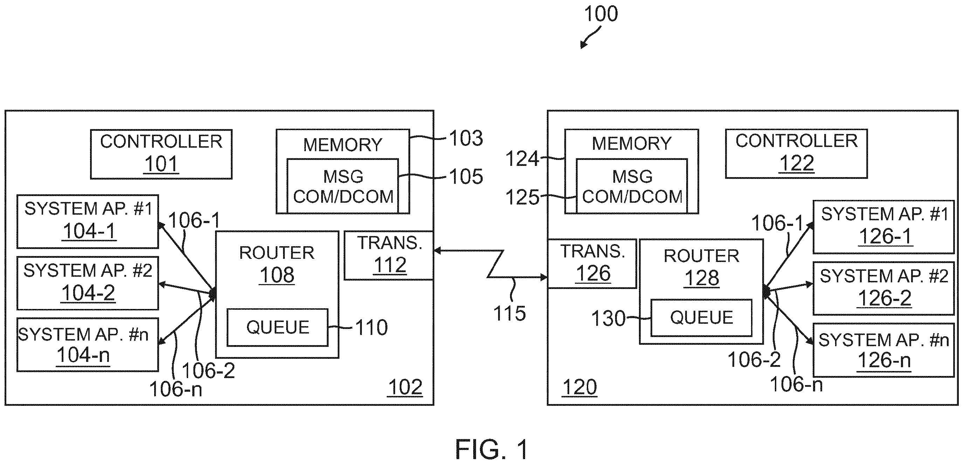

Embodiments of the present invention provide a method of combining short messages together before they are transmitted to reduce the overall number of message that need to be transmitted between communication hubs. Referring to Figure 1, an example communication network 100 of an embodiment is illustrated. In this example communication network 100, a first communication hub 102 is in communication with a second remote communication hub 120. In an example embodiment, the first communication hub may be an aircraft 102 and the second communication hub may be a ground station 120. Although only two communication hubs are illustrates in the communication network 100 of Figure 1, any number of communication hubs more than one can be used in a communication network. Moreover, the communication network may implement the use of multipath communication links to get a message from a source communication hub to a destination communication hub. In addition, there may be multiple components between the communication hubs such as, but not limited to, routers, bridges, etc.

Each communication hub 102 and 120 in the example embodiment of Figure 1 includes at least one controller 101 and 122 and at least one memory 103 and 124 respectfully. In general, each of the controllers 101 and 122 of the respective communication hubs 102 and 103 may include any one or more of a processor, microprocessor, a digital signal processor (DSP), an application specific integrated circuit (ASIC), a field program gate array (FPGA), or equivalent discrete or integrated logic circuitry. In some example embodiments, controllers 101 and 122 may include multiple components, such as any combination of one or more microprocessors, one or more controllers, one or more DSPs, one or more ASICs, one or more FPGAs, as well as other discrete or integrated logic circuitry. The functions attributed to the controllers 101 and 122 herein may be embodied as software, firmware, hardware or any combination thereof. The controllers 102 and 120 may be part of a system controller or a component controller. Each memory 103 and 124 of the respective communication hubs 102 and 120 may include computer-readable operating instructions that, when executed by the respective controllers 101 and 122 provide functions of the communication hub 102 or 120. Such functions may include the functions of communications described below. The computer readable instructions may be encoded within the memory 103 and 124 of the respective communication hub 102 and 120. Memories 103 and 124 may comprise computer readable storage media including any volatile, nonvolatile, magnetic, optical, or electrical media, such as, but not limited to, a random access memory (RAM), read-only memory (ROM), non-volatile RAM (NVRAM), electrically-erasable programmable ROM (EEPROM), flash memory, or any other storage medium.

Communication hub 102 further includes system applications 104-1 through 104-n. In the aircraft example embodiment, the system applications 104-1 through 104-n may generate system information, such as but not limited to, weather information, vehicle performance information, traffic information, position information, operations information, etc. The system applications 104-1 through 104-n may also receive pertinent information from outside sources such as from communication hub 120 (which may be a ground station). This information is passed between the communication hubs by messages illustrated as messages 106-1 through 106-n. In the situation where the system applications 104-1 and 104-n generate the messages 106-1 through 106-n that are to be transmitted to the second communication hub 120, the messages are communicated to a queue 110 (or buffer). A router 108 of the first communication hub 108 gathers messages 106-1 through 106-n generated by the system applications 104-1 through 104-n in the queue 110 to be transmitted and directs received messages to their respective destination system applications 104-1 through 104-n. Messages can get backed up in the queue. One reason for a backup in systems that require an acknowledgment exchange before transmission of the message, is when an acknowledgment is not received back right way. A transceiver 112 transmits messages 106-1 through 106n to a remote destination node (such as the second communication hub 120) when it is the messages turn to be transmitted. In an embodiment, the router 108 and the transceiver 112 is under control of the controller 101. The controller 101 implements instructions stored in the memory 103 in controlling the router 108 and transceiver 112 which are typically in separate avionic boxes. In one embodiment, the router 108 is an Aircraft Addressing and Reporting System (ACARS) router 106. In embodiments, compression/decompression application 105 stored in the memory 103 is implemented by the controller 101. In the situation where messages 106-1 through 106-n are generated by the respective system application 104-1 through 104-n and are to be transmitted to a remote communication hub (such as the second communication hub 120) the compression/decompression application 105 selectively combines short messages waiting in the routing queue 110 to be transmitted as described in detail below. In the situation where the first communication hub 102 receives a combined message 115 that is to be delivered to at least one of the system applications 104-1 through 104-n, the compression/decompression application 105 decompresses the combined message 115 in the routing queue 110. The router 108 then routes the decompressed messages 106-1 through 106-n to the correct system application 104-1 through 104-n.

The second communication hub 120 may have similar features. For example, as illustrated in Figure 1, the second communication hub also has system applications 126-1 through 126-n that generate and receive information in the form of the messages 106-1 through 106-n. The second communication hub 120 may include a router 128 that includes a queue 130 or buffer. The second communication hub further includes a transceiver 126 to transmit and receive massages such as combined message 115. In an embodiment where the second hub is a ground station, the transceiver 126 may be at a remote location from the hub with a network providing communications between the hub and the transceiver 126. Further, the second communication hub 120 includes a message compression/decompression application 125 used to compress small messages 106-1 through 106-n to be transmitted to the same communication hub and decompress a combined message 115 to be communicated to the system applications 126-1 through 126-n. Further still, in other embodiments, a hub, such as hub 120, may only include one of a compression or decompression application. Moreover, the second communication hub 120 in an example of Figure 1, may only include a controller 122 to implement a decompression application 125 to direct decompressed messages to their respective system application. An addition as discussed above, the controllers 101 and 122 may be an overall system controller or may just a controller of a function of the communication hub such as but not limited to, a router controller. Moreover, memory 103 and 124 may be part of an overall system memory or may by a memory specific to a function of the communication hub, such as but not limited to, a router memory.

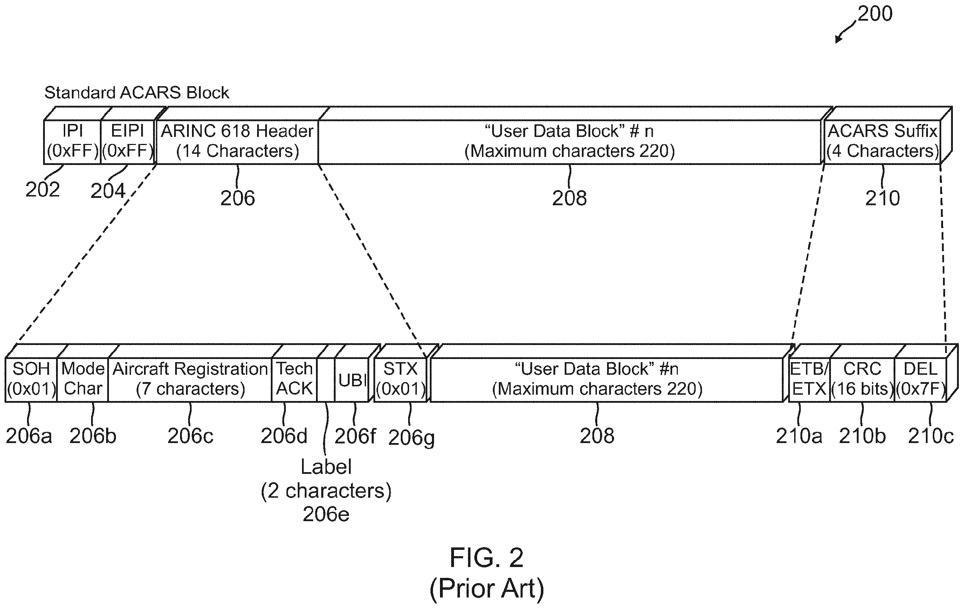

As discussed above, in an embodiment, the communication network 100 may include an aircraft 102 to ground station 120 or aircraft 102 to aircraft 102 network. Moreover, the communication network may include a ground network. For example, part of the network may include a ground network with a service provider that includes a router that is in communication with the ground station and a network connection to hub on the ground. A standard ACARS communication block of the prior art is illustrated in Figure 2 to provided further background. As illustrated, the standard ACARS block 200 includes an initial protocol identifier (IPI) 202, an extended initial protocol identifier (EIPI) 204, an aeronautical radio, incorporated (ARINC) 618 header 206, a user data block 208 and an ACARS suffix 210. The ARINC 618 header 206 includes a start of header (SOH) 206a, a mode character 206b that indicates in a downlink whether the message is intended for a specific ground station or all ground stations in a coverage area, an aircraft registration 206c identifier, a tech acknowledgment message 206d, a header label 206e that is used to describe the message and is used to indicate the classification of the contents of the message being transmitted as well as message routing and address information, an uplink block identifier (UBI) 206f and a start of text (STX) 206g sub-block. The ACARS suffix 210 includes an end of block/end of text marker (ETB/ETX) 210a, a check sum (CRC) 210b to ensure the block is error free and an end of message designated as DEL 210c. The user data block 208 in the ACARS standard block 200 has a maximum characters length of 220 characters.

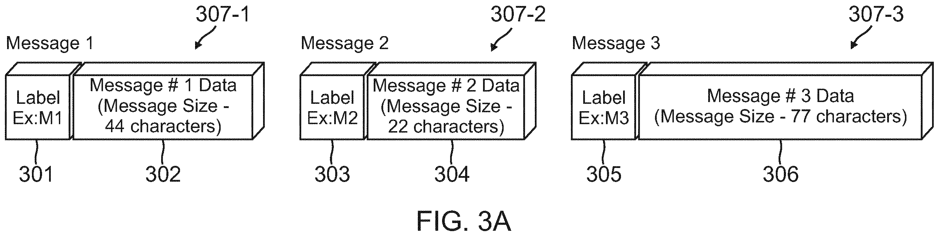

Referring to Figure 3A, example embodiment messages 307-1, 307-2 and 307-3 that are to be compressed into a single message block are illustrated. Message 307-1 includes label 301 and message data 302 that is 44 characters in size. Message 307-2 includes label 303 and message data 304 that is 22 characters in size. Message 307-3 in this example, includes label 305 and message data 306 that is 77 characters in size. In this example, if the three messages 307-1, 307-2 and 307-3 are in a respective routing queue 110 or 130 to be transmitted to the same destination, the respective message compression application 105 or 125 is implemented to combine the message 307-1, 307-2 and 307-3 if possible. In this scenario, the total number of characters in the three messages 306-1, 306-2 and 306-3 is 143 (plus label and message separators as discussed below) is less than the maximum allowed characters in the user data block of an ACARS message (220 characters). Hence, provided there is no reason to not combine the messages 307-1, 307-2 and 307-3 (as discussed below), the respective controller 101 or 122 implements the respective message compression application 105 or 125 to combine the messages 307-1, 307-2 and 307-3.

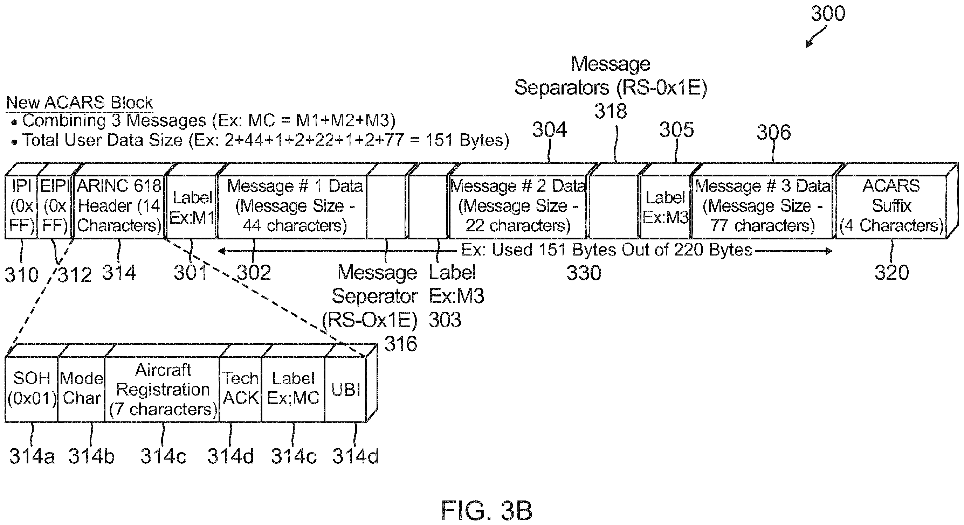

An example of an ACARS message block 300 with combined messages of an embodiment is illustrated in Figure 3B. The combined message (or compressed message) 300 includes messages 307-1, 307-2 and 307-3 in this example. In particular, the user data block 330 includes the message data 302, 304 and 306 of messages 307-1, 307-2 and 307-3 in the user data block 330 of the compressed message 300. As illustrated, the compressed message 300 includes an IPI 310, an EIPI 312, and an ARINC 618 header 314. The ARINC header 618 in this example embodiment includes a SOH 314a, a mode character 314b, an aircraft registration 314, a tech ACK 314d, a message compression label 314c and an UBI 314d. The message compression label 314c includes an indication that the compressed message 300 includes multiple messages in an embodiment. After the UBI 314d, the message data of the messages 307-1, 307-2 and 307-3 are separated by message separators 316 and 318 in the user data block 330. In particular, first the first label 301 of the first message 307-1 is included followed by the first message data 302. A first message separator 316 is used to separate the first message data 302 from the label 303 of the second message 307-2. The second message data 304 is then included with a second message separator 318 separating the second message data 304 from the label 305 of the third message 307-3. After the third message data 306, the ACARS suffix 320 similar to ACARS suffix 210 is used to signal the end of the message. The first message separator 316 and the second message separator 318 are used by the respective message decompression application 105 to separate out the different messages from the combined messages. The respective labels 310, 303 and 305 use up two characters each and the message separators 316 and 318 use up one character each in this example embodiment. Hence, a total size of the combined messages in this embodiment is 143 characters for the combined message data 302, 304 and 306 plus six characters for the labels 301, 303 and 305 and two characters for the message separators 316 and 318 for a total of 151 characters which is below the maximum allowed for a user data block of an ACARS message. Although, the above example, illustrates the combination of three messages in a compressed message any number of messages can be combined provided the total number of characters in the message data of messages, the associated message labels and the message separators is less than or equal to the maximum number of characters allowed in the user data block of the combined message. The above sets out one example of formatting the combined short messages. Other ways of formatting the combined short messages are contemplated and hence the present invention is not limited to one method of formatting the short combined messages.

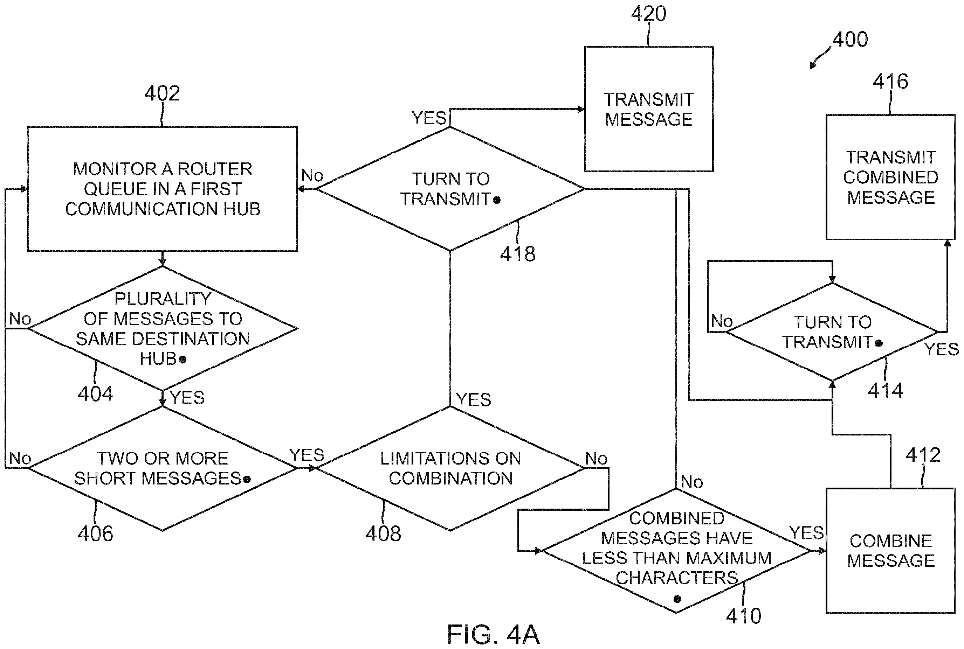

Referring to Figure 4A, a message processing flow diagram 400 of one embodiment is illustrated. The message processing flow diagram 400 illustrates an implementation of a compression part of a message compression/decompression application, such as message compression/decompression application 105 of the first communication hub 102. The message processing flow diagram 400 starts by monitoring a router queue in a first communication hub, such as queue 110 of router 108 of the first communication (402). It is then determined if a plurality of messages to the same destination hub are then currently stored in the queue 110 waiting to be transmitted (404). This is done in one embodiment by reviewing the ACARS 618 header which would include destination information. ACARS downlinks have labels or label/sub-labels combinations that indicate the destination hub. The controller 101, in an embodiment, reads the label or label/sub-label definitions to determine which messages go to the same destination hub. In one embodiment this is done by configuring the controller to know which messages could be combine via database, hardcoded, etc. Uplinks have aircraft identifiers. If messages are going to the same hub (i.e. aircraft in this example) then they can be combined if there is not limitation to the combination as discussed below. If there is not a plurality of messages to the same destination hub then currently stored in the destination hub at step (404), the process continues monitoring the queue 110 at step (402). If it is determined that a plurality of messages to the same destination hub (such as, but not limited to, a ground station) are then currently stored in the queue 110 waiting to be transmitted at step (404), it is then determined if two or more messages are short messages (406). A short message, as described above, is a message that has less than the number of maximum characters allowed in the user data block of the ACARS block.

If it is determined that two or more messages are not short messages at step (406), the process continues at step (402) monitoring the router queue. If it is determined that two or more messages are short messages at step (406), it is then determined if any one of the two or more short messages have limitations on their combination (408). In the aeronautic realm, due to safety concerns certain types of safety massages should not be combined with other messages. Moreover, messages having a final destination that are different (for example, different airline hosts in the downlinks) may not be combined in an embodiment. If it is determined that any one of the two or more short messages have limitations on their combination at step (408), it is then determined if it is either of the messages turn to be transmitted at step (418). If it is the turn of one of the messages to be transmitted, the message is transmitted at step (420), otherwise the process again continues monitoring the router queue at step (402). If it is determined that any one of the two or more short messages do not have limitations on their combination at step (408), it is then determined if the combined messages have more characters than the maximum number of characters allowed for a message (410). If it is determined that the combined messages have more characters than the maximum number of characters allowed for a message at step (410), the messages are not combined and it is then determined if it is either of the messages turn to be transmitted at step (418). If it is the turn of one of the messages to be transmitted, the message is transmitted at step (420), otherwise the process again continues monitoring the router queue at step (402).

If it is determined that the combined messages have less characters than the maximum number of characters allowed for a message at step (410), the messages are combined (412). An example of a combined message (i.e. compressing) is provided above in view of Figure 3A and 3B. After the messages are combined, it is then determined, in an embodiment, if it is at least one of the messages in the combined messages turn to be transmitted (414) and the router queue is further monitored at step (402) for additional messages to combine. If it is not the turn of at least one of the message in the combined messages to be transmitted at step (414), the combined message waits in the router queue until it is its turn to be transmitted. When it is determined that it is time to transmit the combined message at step (414), the combined message is transmitted (416). In one embodiment, once the messages are combined and ready to transmit, the system keeps checking to see if any other messages to the same destination are entered into the queue before the transmit time of one of the combined messages is reached. If there is, the newly entered messages in the queue are combined into the message if allowable. Moreover, in yet another embodiment, the combining of messages do not take place until it is the turn of a message to be transmitted. In this embodiment, once it is the turn of a message to be transmitted, the remaining messages in the queue are look at to determine if they can be combined with the message who turn it is to be transmitted. If they can be combined, they are combined with the message and then transmitted.

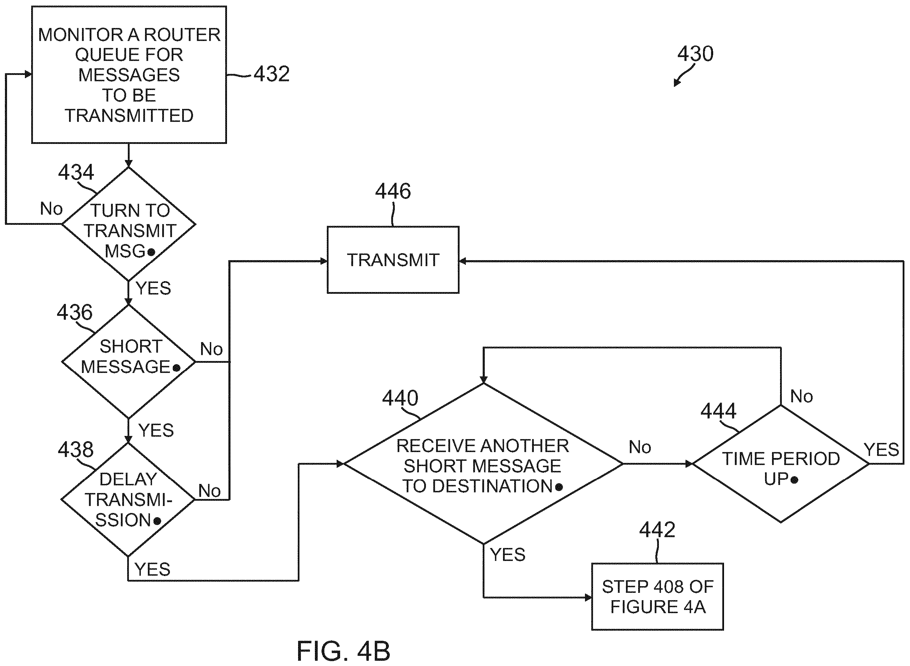

Further still, in one embodiment, when it is the turn of one first short message directed to a specific destination communication hub in the router queue to be transmitted, it is determined if the transmission of the message can be delayed for a period of time to see if at least one more short message gets placed in the queue to the specific destination communication hub that can be combined with the one first short message. This embodiment is illustrated in the transmission delay flow diagram 430 of Figure 4B. In this example embodiment, the router queue is monitored for messages to be transmitted. When it is a messages turn to be transmitted (434), it is determined if it is a short message (436). If it is not a short message, it is transmitted (446). If it is determined to be a short message at step (436), it is determined if it is a message in which the transmission can be delayed at step (438). Hence this step determines if the message includes critical or priority data that needs to be sent right away or data that does not need to be transmitted right away. If it is determined that the data contained in the message needs to be transmitted right away at step (438), the message is transmitted (446). If it is determined the data can be delayed at step (438), the routing queue is monitored for a select period of time to see if another short message to the specific destination communication hub is received. If another short message to the specific destination communication hub is detected at step (440), the process continues at step (408) in the compression flow diagram 400 of Figure 4A (442). If another short message to the specific destination communication hub is not detected before the end of the time period at step (444), the message is transmitted at step (446).

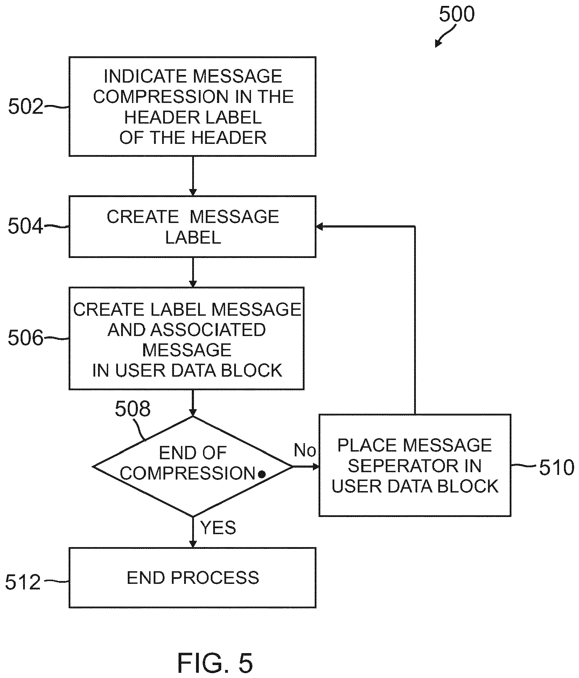

As discussed above in embodiments the controller, such as controller 101 of the first communication hub 102 and controller 122 of the second communication hub 120, selectively compresses short messages into a single message block as stated in step (412) of Figure 4A. Figure 5 illustrates an example message compression flow diagram 500 in view of the message block 300 example of Figure 3B. As illustrated in Figure 5, the message compression flow diagram starts by indicating message compression in the header label 314c of the header 314 of the message block 300 (502). The message compression indicates to a reader of the message block 300 that the message block contains more than one message. In one embodiment, the message compression label 314c indicates the number of the messages contained in the user data block 330 of the message block. In one embodiment, more than one special label is used in situations where multiple destination hubs is desired. A message label 301 for the first message in then created (504). The first message label 301 and associate message 302 are then placed in the user date block 330 (560). It is then determined if it is the end of the messages at step (508). If it is determined it is not the end of the messages at block (508), a message separator 316 is placed in the user data block 330 (510). Another message label 303 is then created for the next message 304 at step (504). This second message label 303 and second message 304 are then placed in the user data block 330 with the separator 316 positioned between the first message 302 and the next, second message label 303 (508). It is then again determined if it is the end of the compression at step (508). If it is not the end of the compression, another message separator 318 is created and placed in the user data block 330. Another, message label is then created (such as a third message label 305) (504). The third message label 305 and an associated third message 306 are then placed in the user data block 330 with the message separator positioned between the second message 304 and the third label 305 (506). In an embodiment, since each message in the queue will have its own label, only one new label indicating the combined messages needs to be created. Hence, in this embodiment, the message labels in the queue are used as the first, second and third message labels 301, 303 and 305. If it then determines that it is the end of the compression (i.e. no more messages to add) at step (508), the process ends (512). Although, the above example combines three messages into the user data block, any number of messages with message labels and separators having a total number of characters equal to or under the maximum number of characters allowed in the user data block can be used as discussed above.

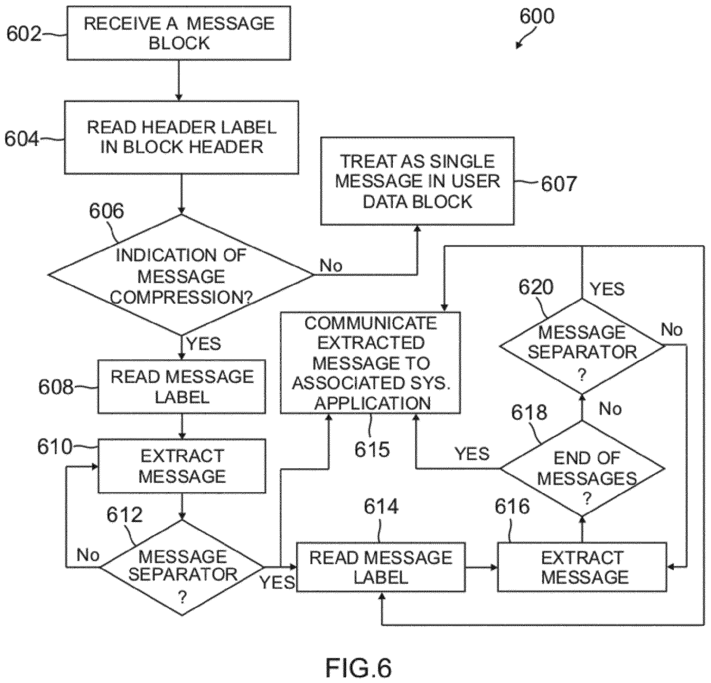

As discussed above, when a communication hub (such as communication hub 102 or communication hub 120) receives a message block 300, the message block 300 needs to be decompressed if it contains more than one message. An example, decompression flow diagram 600 is illustrated in Figure 6. In the example, the process starts when receiving a message block 300 (602). The header label 314c of the block header 314c is read at block (604). It is determined if the header label 604 indicates that the user data block 330 includes more than one message at step (606). If the leader label 604 does not indicate message compression at step (606), the message block is treated as a message block with a single message and processed accordingly. If the leader label 604 does indicate message compression at step (606), a first message label is read at step (608) and the first message is extracted (610). The extraction of the first message continues until a message separator 316 is encountered at step (612). The message separator indicates the end of the first message 302. Upon detection of the message separator 316 at step (612), the first message 302 is communicated to an application system that it is directed to (615). The next message label is read at step (614). The associated message (such as the second message 304) is then extracted at (step 616) until either an end of message indicator is reached (618) (such as an ETX 210a in a suffix 210) or a message separator 318 is reached (620). Once a message separator is reached at step (620), the message, such as the second message 304 is communicated to an associated application system it is directed to at step (615) and the process then continues at step (614) reading the next message label, such as the third message label 305 and extracting the third message 306 at step (618). Once an end of message indicator is reached at step (618), the message, such as the third message 306 is communicated to an associated application system it is direct to at step (615).

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims.

## Claims

1. A method of compressing messages into a message block (300), the method comprising:
monitoring a router queue (110) of a first communication hub (102) for short messages that are waiting to be transmitted to the same second communication hub (120), wherein a short message is a message that contains less characters than a maximum number of characters allowed in a user data block (133) of the message block (300);
the method **characterized in that** it further comprises:
combining at least two short messages monitored in the router queue (110) waiting to be transmitted to the same second communication hub (120) when a combined message character number is less than the maximum number of characters allowed in the user data block (330) of the message block (300) and none of the at least two short messages are of a type of aeronautic safety message that has limitations on its combination with other messages due to safety concerns; and
transmitting the message block (300) with the combined at least two messages.

2. The method of claim 1, further comprising:
preventing the combining of short messages having defined limitations to their combination.

3. The method of claim 1, further comprising:
when only one short message to be transmitted to the second communication hub (120) is monitored in the routing queue (110), determining if the one short message can wait for communication for a select period of time; and
when a second short message is received at the routing queue (110) before the end of the select period of time, combining at least the first and second short messages and communicating the combined first and second short messages to the second communication hub (120).

4. The method of claim 1, further comprising:
indicating message compression in a header label (314c) of a header (314) of the message block (300); and
placing message separators (316, 318) between combined messages of the message block (300).

5. The method of claim 4, wherein the combining of the at least two short messages monitored in the router queue (110) waiting to be transmitted to the same second communication hub (120) when a combined message character number is less than the maximum number of characters allowed in the user data block (330) of the message block (300) further comprises:
combining of the at least two short messages monitored in the router queue (110) waiting to be transmitted to the same second communication hub (120) when a combined message character number plus characters for the message separators (316, 318) and message labels (301, 303 and 305) are less than the maximum number of characters allowed in the user data block (330) of the message block (300).

6. A communication hub (102) comprising:
a transceiver (112) configured to transmit and receive messages;
at least one communication router (108) having a routing queue (110), the routing queue (110) configured to buffer messages while the messages wait their turn to be transmitted by the transceiver (112);
at least one memory (103) to at least in part store operating instructions; and
at least one controller (101) configured to execute the operating instructions stored in the at least one memory (103), the at least one controller (101) configured to execute the operating instructions to monitor the router queue (110) of the communication hub (102) for short messages that are waiting to be transmitted to a same remote communication hub (120), wherein a short message is a message that contains less characters than a maximum number of characters allowed in a user data block (133) of a message block (300), the communication hub **characterized in that** the at least one controller (101) is further configured to execute the operating instructions to compress messages by combining at least two short messages monitored in the router queue (110) waiting to be transmitted to the same remote communication hub (120) when a combined message character number of the at least two short messages is less than a maximum number of characters allowed in a user data block (330) of the message block (300) and none of the at least two messages are of a type of aeronautic safety message that has limitations on its combination with other messages due to safety concerns.

7. The communication hub of claim 6, wherein the at least one controller (101) is configured to operate the transmitter (112) to transmit the combined messages of the message block when it is the turn of at least one of the at least two short messages to be transmitted.

8. The communication hub of claim 6, wherein the at least one controller (101) is configured to execute the operating instructions to prevent the combining of short messages having defined limitations to their combination.

9. The communication hub of claim 6, wherein the at least one controller (101) is configured to execute the operating instructions to count the characters in the short messages, message labels and message separators in determining if the combined at least two short messages have less than the maximum number of characters allowed in the user data block (330) of the message block (300).

10. The communication hub of claim 6, wherein the at least one controller (101) is configured to execute the operating instructions to decompress received combined messages of the message block through the transceiver (112).

## Patentansprüche

1. Verfahren zum Komprimieren von Nachrichten in einen Nachrichtenblock (300), wobei das Verfahren umfasst:
Überwachen einer Router-Warteschlange (110) eines ersten Kommunikations-Hubs (102) für Kurznachrichten, die darauf warten, an denselben zweiten Kommunikations-Hub (120) übertragen zu werden, wobei eine Kurznachricht eine Nachricht ist, die weniger Zeichen als eine maximale Zeichenanzahl, die in einem Benutzerdatenblock (133) des Nachrichtenblocks (300) erlaubt ist, enthält;
wobei das Verfahren **dadurch gekennzeichnet ist, dass** es ferner umfasst:
Kombinieren mindestens zweier überwachter Nachrichten in der Router-Warteschlange (110) die darauf warten, an denselben zweiten Kommunikations-Hub (120) übertragen zu werden, wenn eine kombinierte Nachrichtenzeichenanzahl kleiner ist als die maximale Zeichenanzahl, die in dem Benutzerdatenblock (330) des Nachrichtenblocks (300) erlaubt ist, und keine der mindestens zwei Kurznachrichten eine Art von Luftfahrtsicherheitsnachricht ist, deren Kombination mit anderen Nachrichten aufgrund von Sicherheitsbedenken Einschränkungen unterliegt; und
Übertragen des Nachrichtenblocks (300) mit den kombinierten mindestens zwei Nachrichten.

2. Verfahren nach Anspruch 1, das ferner umfasst:
Verhindern des Kombinierens von Kurznachrichten, die definierte Einschränkungen für ihre Kombination aufweisen.

3. Verfahren nach Anspruch 1, das ferner umfasst:
wenn nur eine Kurznachricht, die an den zweiten Kommunikations-Hub (120) zu senden ist, in der Routing-Warteschlange (110) überwacht wird, Bestimmen, ob die eine Kurznachricht für eine ausgewählte Zeitspanne auf Kommunikation warten kann; und
wenn eine zweite Kurznachricht vor dem Ende der ausgewählten Zeitspanne in der Routing-Warteschlange (110) empfangen wird, Kombinieren mindestens der ersten und der zweiten Kurznachricht und Übermitteln der ersten und der zweiten Kurznachricht an den zweiten Kommunikations-Hub (120).

4. Verfahren nach Anspruch 1, das ferner umfasst:
Angeben von Nachrichtenkomprimierung in einem Header-Label (314c) eines Headers (314) des Nachrichtenblocks (300); und
Platzieren von Nachrichtentrennzeichen (316, 318) zwischen kombinierten Nachrichten des Nachrichtenblocks (300).

5. Verfahren nach Anspruch 4, wobei das Kombinieren der mindestens zwei Kurznachrichten, die in der Router-Warteschlange (110) überwacht werden, die darauf warten, an denselben zweiten Kommunikations-Hub (120) übertragen zu werden, wenn eine kombinierte Nachrichtenzeichenanzahl kleiner ist als die maximale Zeichenanzahl, die in dem Benutzerdatenblock (330) des Nachrichtenblocks (300) erlaubt ist, ferner umfasst:
Kombinieren der mindestens zwei Kurznachrichten, die in der Router-Warteschlange (110) überwacht werden, die darauf warten, an denselben zweiten Kommunikations-Hub (120) übertragen zu werden, wenn eine kombinierte Nachrichtenzeichenanzahl zuzüglich Zeichen für die Nachrichtentrennzeichen (316, 318) und Nachrichten-Labels (301, 303 und 305) kleiner ist als die maximale Zeichenanzahl, die in dem Benutzerdatenblock (330) des Nachrichtenblocks (300) erlaubt ist.

6. Kommunikations-Hub (102), der umfasst:
einen Transceiver (112), der dazu konfiguriert ist, Nachrichten zu übertragen und zu empfangen;
mindestens einen Kommunikations-Router (108), der eine Routing-Warteschlange (110) aufweist, wobei die Routing-Warteschlange (110) dazu konfiguriert ist, Nachrichten zwischenzuspeichern, während die Nachrichten darauf warten, dass sie an der Reihe sind, von dem Transceiver (112) übertragen zu werden;
mindestens einen Speicher (103), um Betriebsanweisungen mindestens zum Teil zu speichern; und
mindestens eine Steuervorrichtung (101), die dazu konfiguriert ist, die Betriebsanweisungen, die in dem mindestens einen Speicher (103) gespeichert sind, auszuführen, wobei die mindestens eine Steuervorrichtung (101), die dazu konfiguriert ist, die Betriebsanweisungen zum Überwachen der Router-Warteschlange (110) des Kommunikations-Hubs für Kurzmitteilungen (102), die darauf warten, an denselben Fernkommunikations-Hub (120) übertragen zu werden, auszuführen, wobei eine Kurznachricht eine Nachricht ist, die weniger Zeichen enthält als eine maximale Zeichenanzahl, die in einen Benutzerdatenblock (133) eines Nachrichtenblocks (300) erlaubt ist, wobei der Kommunikations-Hub **dadurch gekennzeichnet ist, dass** die mindestens eine Steuervorrichtung (101) ferner dazu konfiguriert ist, die Betriebsanweisungen zum Komprimieren von Nachrichten durch Kombinieren mindestens zweier Kurznachrichten, die in der Router-Warteschlange (110) überwacht werden, die darauf warten, an denselben Fernkommunikations-Hub (120) übertragen zu werden, auszuführen, wenn eine kombinierte Nachrichtenzeichenanzahl der kombinierten Nachricht der mindestens zwei Kurznachrichten kleiner ist als eine maximale Zeichenanzahl, die in einem Benutzerdatenblock (330) des Nachrichtenblocks (300) erlaubt ist, und keine der mindestens zwei Nachrichten eine Art von Luftfahrtsicherheitsnachricht ist, deren Kombination mit anderen Nachrichten aufgrund von Sicherheitsbedenken Einschränkungen unterliegt.

7. Kommunikations-Hub nach Anspruch 6, wobei die mindestens eine Steuervorrichtung (101) dazu konfiguriert ist, den Sender (112) zum Übertragen der kombinierten Nachrichten des Nachrichtenblocks zu betätigen, wenn mindestens eine der mindestens zwei Kurznachrichten an der Reihe ist, übertragen zu werden.

8. Kommunikations-Hub nach Anspruch 6, wobei die mindestens eine Steuervorrichtung (101) dazu konfiguriert ist, die Betriebsanweisungen auszuführen, um das Kombinieren von Kurznachrichten zu verhindern, die definierte Einschränkungen für ihre Kombination aufweisen.

9. Kommunikations-Hub nach Anspruch 6, wobei die mindestens eine Steuervorrichtung (101) dazu konfiguriert ist, die Betriebsanweisungen zum Zählen der Zeichen in den Kurznachrichten, Nachrichten-Labels und Nachrichtentrennzeichen auszuführen, um zu bestimmen, ob die kombinierten mindestens zwei Kurznachrichten weniger als die maximale Zeichenanzahl, die in dem Benutzerdatenblock (330) des Nachrichtenblocks (300) erlaubt ist, aufweisen.

10. Kommunikations-Hub nach Anspruch 6, wobei die mindestens eine Steuervorrichtung (101) dazu konfiguriert ist, die Betriebsanweisungen auszuführen, um empfangene kombinierte Nachrichten des Nachrichtenblocks durch den Transceiver (112) zu dekomprimieren.

## Revendications

1. Procédé de compression de messages en un bloc de messages (300), le procédé comprenant :
la surveillance d'une file d'attente de routeur (110) d'un premier concentrateur de communication (102) pour les messages courts qui attendent leur transmission à un même second concentrateur de communication (120), un message court étant un message contenant moins de caractères qu'un nombre maximal de caractères autorisé dans un bloc de données d'utilisateur (133) du bloc de messages (300) ;
le procédé **se caractérisant en ce qu'**il comprend en outre :
la combinaison d'au moins deux messages courts surveillés dans la file d'attente de routeur (110) en attente d'une transmission au même second concentrateur de communication (120) lorsqu'un nombre de caractères de message combiné est inférieur au nombre maximal de caractères autorisé dans le bloc de données d'utilisateur (330) du bloc de messages (300) et qu'aucun des au moins deux messages courts n'est d'un type de message de sécurité aéronautique dont la combinaison avec d'autres messages présente des limites en raison de problèmes de sécurité ; et
la transmission du bloc de messages (300) avec les au moins deux messages combinés.

2. Procédé selon la revendication 1, comprenant en outre :
la prévention de la combinaison de messages courts dont la combinaison présente des limites définies.

3. Procédé selon la revendication 1, comprenant en outre :
lorsqu'un seul message court à transmettre au second concentrateur de communication (120) est surveillé dans la file d'attente de routage (110), la détermination pour savoir si le message court peut attendre sa communication pendant une durée choisie ; et
lorsqu'un second message court est reçu dans la file d'attente de routage (110) avant la fin de la durée choisie, la combinaison d'au moins les premier et second messages courts et la communication des premier et second messages courts combinés au second concentrateur de communication (120).

4. Procédé selon la revendication 1, comprenant en outre :
l'indication de la compression de messages dans une étiquette d'en-tête (314c) d'un en-tête (314) du bloc de messages (300) ; et
le placement de séparateurs de messages (316, 318) entre des messages combinés du bloc de messages (300).

5. Procédé selon la revendication 4, dans lequel la combinaison des au moins deux messages courts surveillés dans la file d'attente de routeur (110) en attente de transmission au même second concentrateur de communication (120) lorsqu'un nombre de caractères de messages combinés est inférieur au nombre maximal de caractères autorisé dans le bloc de données d'utilisateur (330) du bloc de messages (300) comprend en outre :
la combinaison des au moins deux messages courts surveillés dans la file d'attente de routeur (110) en attente de transmission au même second concentrateur de communication (120) lorsqu'un nombre de caractère de messages combinés plus des caractères destinés aux séparateurs de message (316, 318) et aux étiquettes de message (301, 303 et 305) est inférieur au nombre maximal de caractères autorisé dans le bloc de données d'utilisateur (330) du bloc de messages (300).

6. Concentrateur de communication (102) comprenant :
un émetteur-récepteur (112), configuré pour transmettre et pour recevoir des messages ;
au moins un routeur de communication (108) comportant une file d'attente de routage (110), la file d'attente de routage (110) étant configurée pour mettre en tampon des messages pendant que les messages attendent leur tour pour être transmis par l'émetteur-récepteur (112) ;
au moins une mémoire (103), permettant de stocker au moins en partie des instructions de fonctionnement ; et
au moins un dispositif de commande (101), configuré pour exécuter les instructions de fonctionnement stockées dans l'au moins une mémoire (103), l'au moins un dispositif de commande (101) étant configuré pour exécuter les instructions de fonctionnement afin de surveiller la file d'attente de routeur (110) du concentrateur de communication (102) pour les messages courts qui attendent leur transmission à un même concentrateur distant de communication (120), un message court étant un message contenant moins de caractères qu'un nombre maximal de caractères autorisé dans un bloc de données d'utilisateur (133) d'un bloc de messages (300), le concentrateur de communication **se caractérisant en ce que** l'au moins un dispositif de commande (101) est en outre configuré pour exécuter les instructions de fonctionnement pour compresser les messages en combinant au moins deux messages courts surveillés dans la file d'attente de routeur (110) en attente de transmission au même concentrateur de communication distant (120) lorsqu'un nombre de caractères de messages combinés des au moins deux messages courts est inférieur au nombre maximal de caractères autorisé dans un bloc de données d'utilisateur (330) du bloc de messages (300) et qu'aucun des au moins deux messages n'est d'un type de message de sécurité aéronautique dont la combinaison avec d'autres messages présente des limites pour des raisons de sécurité.

7. Concentrateur de communication selon la revendication 6, dans lequel l'au moins un dispositif de commande (101) est configuré pour commander à l'émetteur (112) de transmettre les messages combinés du bloc de messages lorsque c'est au tour d'au moins l'un des au moins deux messages courts d'être transmis.

8. Concentrateur de communication selon la revendication 6, dans lequel l'au moins un dispositif de commande (101) est configuré pour exécuter les instructions de fonctionnement pour empêcher la combinaison de messages courts dont la combinaison présente des limites définies.

9. Concentrateur de communication selon la revendication 6, dans lequel l'au moins un dispositif de commande (101) est configuré pour exécuter les instructions de fonctionnement permettant de compter les caractères dans les messages courts, les étiquettes de message et les séparateurs de messages pour déterminer si les au moins deux messages courts combinés comptent moins de caractères que le nombre maximal de caractères autorisé dans le bloc de données d'utilisateur (330) du bloc de messages (300).

10. Concentrateur de communication selon la revendication 6, dans lequel l'au moins un dispositif de commande (101) est configuré pour exécuter les instructions de fonctionnement pour décompresser les messages combinés reçus du bloc de messages au moyen de l'émetteur-récepteur (112).
